# EUROPEAN PATENT SPECIFICATION

(11) **EP 4 098 892 B1**
(45) Date of publication and mention of the grant of the patent: **12.02.2025**
(21) Application number: 22174902.1
(22) Date of filing: 23.05.2022
(51) Int. Cl.: F16B 21/12, F16B 41/00, E04G 1/06, E04G 1/08, E04G 7/20, E04G 7/24

(54) **LOCKING SYSTEM FOR SCAFFOLDINGS STRUCTURES**
VERRIEGELUNGSSYSTEM FÜR GERÜSTSTRUKTUREN
SYSTEME DE VERROUILLAGE POUR DES STRUCTURES D'ÉCHAFAUDAGE

(30) Priority: 31.05.2021 IT 202100014234
(43) Date of publication of application: 07.12.2022
(73) Proprietor: Pilosio S.r.l., 33010 Tavagnacco (UD) (IT)
(72) Inventor: PARISOTTO, Nereo, 31038 Paese (TV) (IT)
(74) Representative: Studio Torta S.p.A.

(56) References cited:
- EP-A1- 2 314 796
- EP-A1- 3 477 126
- WO-A1-2018/167427
- GB-A- 1 088 253

## Description

### CROSS-REFERENCE TO RELATED APPLICATIONS

This Patent Application claims priority from Italian Patent Application No. 102021000014234 filed on May 31, 2021.

### TECHNICAL FIELD

The present invention relates to a locking pin for scaffolding structures.

In particular, the present invention relates to a locking system comprising tubular elements and a locking pin structured to axially and angularly lock two tubular elements which are telescopically coupled to each other and are in turn comprised in component parts of a scaffolding structure; to which the following description will make explicit reference without thereby losing generality.

### PRIOR ART

As is known, scaffolding structures are generally used, depending on their type, in construction sites for the construction of buildings and/or in civil construction sites for the construction of road/railway works such as viaducts or the like.

Scaffolding structures commonly consist of a plurality of modular elements which are structured so as to be easily transported and assembled/disassembled on the construction site.

The modular elements comprise a plurality of uprights and beams which have tubular axial ends shaped so as to provide, in pairs, a stable but easily removable telescopic coupling between the modular elements themselves.

Scaffolding structures also generally comprise locking systems, which are designed to lock the tubular axial ends of the modular elements to each other, when they are telescopically engaged with each other, so as to lock them angularly and axially.

Some locking systems of the above-mentioned type provide for the use of a bolt which has a threaded pin on which, in use, a closing nut is screwed.

The operation of locking the tubular elements therefore comprises engaging the threaded pin in two pairs of holes which are formed on the tubular ends of the modular elements, so that they are aligned when the tubular ends are coupled.

The nut is also screwed onto the end of the threaded pin protruding from the tubular elements, on the opposite side with respect to the head, so as to prevent the pin from slipping out of the holes.

Although, on the one hand, the operation of screwing/unscrewing a nut on a threaded pin is generally an easy operation, on the other hand it is a particularly

complex and somewhat critical operation when it is to be carried out by an operator during the assembly/disassembly of a scaffolding, especially when this activity is carried out with the operator suspended at a certain height above the ground.

In these conditions, in fact, the operator is subject to several operational issues which arise both from the need to arrange and grip the nut from a container, and from the need to arrange, grip and manoeuvre the wrench while screwing/unscrewing the nut.

Accordingly, the locking systems for scaffolding of the type described above, although on the one hand seem to be mechanically simple, on the other hand, exhibit some issues during assembly/disassembly, which have not been satisfactorily overcome to date.

Solutions disclosed in EP2314796A1, which discloses the preamble of claim 1, EP3477126A1 and WO2018/167427 A1 are also known.

### DESCRIPTION OF THE INVENTION

The object of the present invention is therefore to provide a locking system provided with a locking pin which allows the above issues to be overcome.

According to the present invention, there is provided a locking system as defined in claim 1, for scaffolding, further details being as claimed in the respective attached claims.

The claims describe preferred embodiments of the present invention forming an integral part of the present specification.

### BRIEF DESCRIPTION OF THE DRAWINGS

The invention is described below with reference to the accompanying drawings, wherein:
- Figure 1 is a perspective view, with parts partially in section and parts removed for clarity, of a locking pin designed to define a removable joint between tubular elements of a scaffolding structure, provided according to the teachings of the present invention,
- Figures 2 and 3 are further schematic views of the locking pin according to the present invention, during its operation,
- Figure 4 is an exploded view of the locking pin shown in Figure 1,
- Figure 5 is a side elevation view of the locking pin shown in Figure 1,
- Figure 6 shows a telescopic connecting element of the locking system of the present invention,
- Figure 7 is a partially exploded schematic view of a first embodiment of a scaffolding structure, with parts on an enlarged scale showing the locking system according to the present invention,
- Figure 8 is a partially exploded schematic view of a second embodiment of a scaffolding structure, with parts on an enlarged scale showing the locking system according to the present invention,
- Figure 9 is a vertical section, with parts on an enlarged scale, of a telescopic connecting element on which locking pins according to the present invention are engaged,
- Figures 10 and 11 are further embodiments of the locking pin shown in Figures 1-9, whereas
- Figures 12 and 13 show an additional embodiment of a locking pin according to two different operating configurations.

### PREFERRED EMBODIMENTS OF THE INVENTION

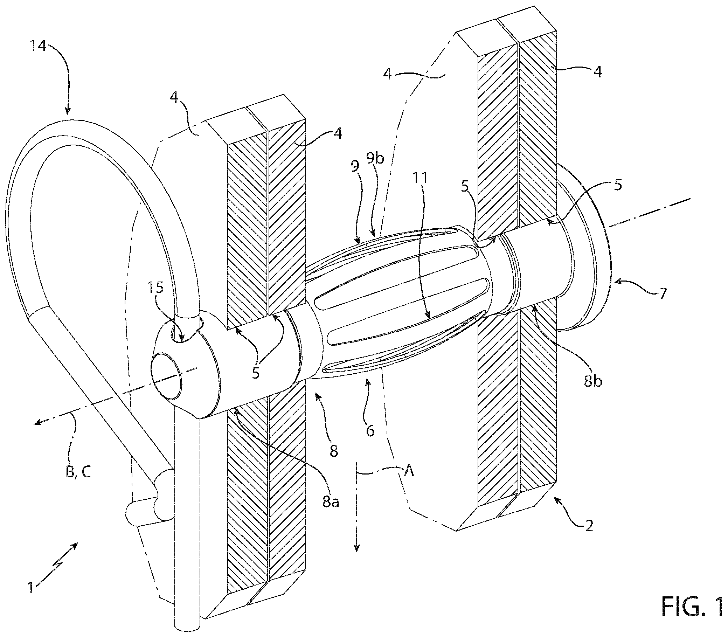

With reference to Figures 1-9, number 1 indicates, as a whole, a locking system for a scaffolding structure 2.

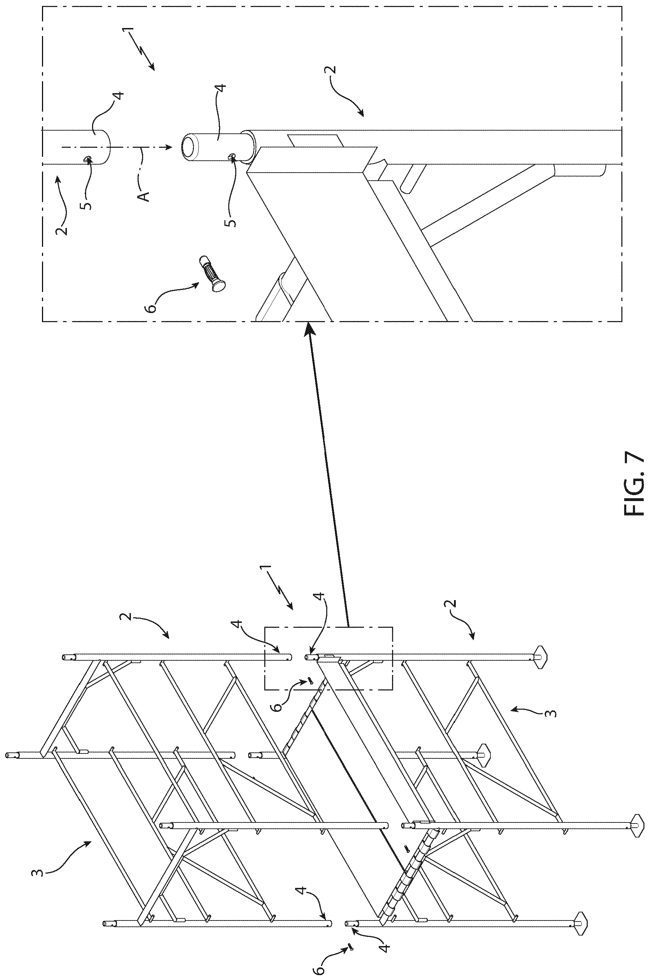

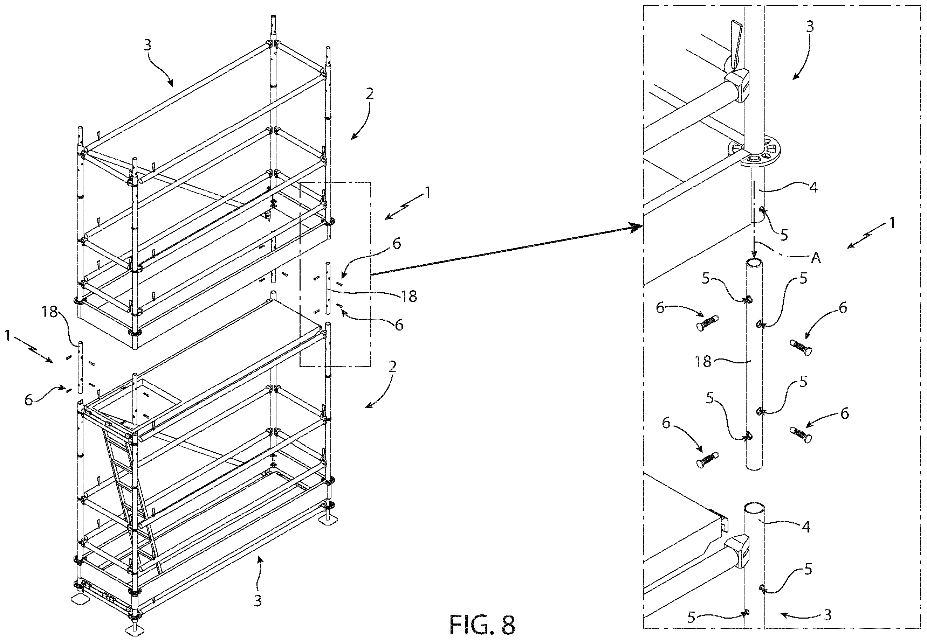

According to the following description and on the basis of the present invention it should be understood that the term scaffolding structure refers to any type of temporary structure, which can be easily transported, assembled and disassembled (manually), and is used to support operators/materials during the execution of building/civil construction works. The scaffolding structure can be arranged resting on the ground and/or be of the suspended type (Figures 7 and 8).

According to the invention shown in Figures 1 and 7, the scaffolding structure 2 is provided with modular scaffolding parts or elements 3. The scaffolding elements 3 are coupled to each other by means of respective tubular portions or elements 4.

The scaffolding elements 3 forming a scaffolding structure 2 are known and will therefore not be described in detail, except to point out that in the example illustrated in the accompanying figures, they comprise (are formed by) rectilinear tubular beams and uprights (tubular section bars), which have their respective opposite axial ends shaped so as to define the tubular elements 4.

As shown in Figures 1 and 7, the tubular elements 4 are shaped so as to be telescopically coupled together in pairs. The tubular elements 4 can have, for example, a male-female shape/configuration, and a circular cross-section.

The locking system 1 comprises a series of through openings or holes 5 which are formed on the tubular elements 4. The example illustrated in Figure 1 shows (partially) an inner tubular element 4 and an outer tubular element 4 telescopically coupled inside each other. The holes 5 are formed on the tubular elements 4 so that the pair of holes 5 of a tubular element 4 is aligned with the pair of holes 5 of the other tubular element 4 along an axis B transverse to the axis A of the tubular elements 4 when the latter are telescopically coupled to each other (Figures 1, 2 and 3).

The locking system 1 also comprises a locking pin 6, which is structured so as to define a dismountable (removable) joint between the tubular elements 4 of the scaffolding structure 3.

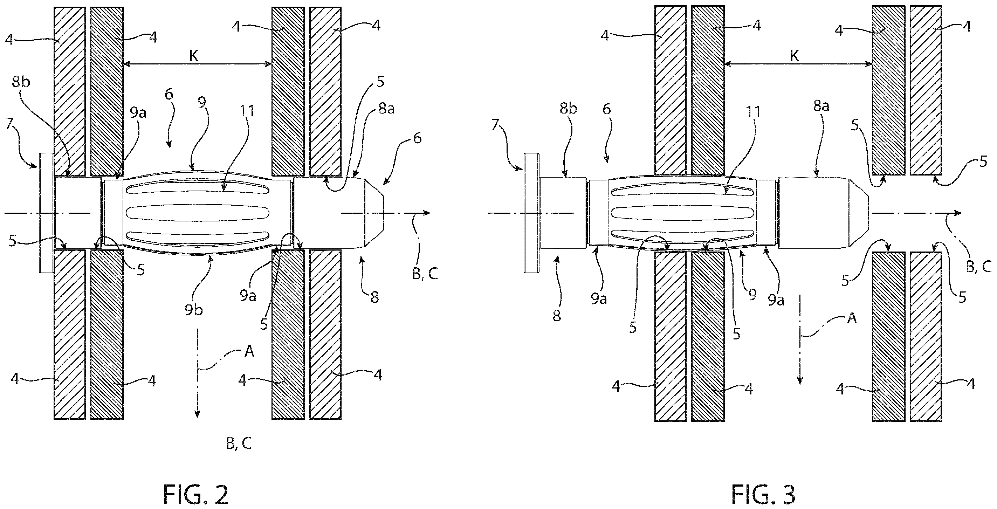

With reference to Figures 1 and 2, the locking pin 6 comprises a head 7, and a stem or shank 8. The locking pin 6 is preferably made of a metal material, for example steel or the like. The head 7 is preferably disc-shaped and is sized so as to abut against the outer surface of a tubular element 4 next to a hole 5. The shank 8 extends cantilevered from the head 7 along a longitudinal axis C. According to a preferred embodiment, the shank 8 is approximately cylindrical and rectilinear and has a cross-section transverse to the circular longitudinal axis C. It is understood, however, that the present invention is not limited to a shank 8 with a circular cross-section but may alternatively provide other cross-sections such as a quadrangular, elliptical, or similar cross-section. It is also understood that the cross-section of the shank 8 (and/or its size) can vary based on (can depend on) the shape (and/or size) of the holes 5, i.e., it is complementary to the shape of the holes so as to be able to pass through them (freely).

With reference to Figure 1, the shank 8 is inserted through the two pairs of holes 5 of the two tubular elements 4 so as to lock them axially and angularly to each other. The shank 8 also has a free end portion 8a which, when the locking pin 6 is inserted in the holes 5 (Figure 1), protrudes outside the tubular elements 4 on the opposite side with respect to the head 7. The free end portion 8a can be conveniently peripherally chamfered along its annular edge so as assist the shank 8 in engaging (and passing through) the holes 5.

According to the invention, the locking pin 6 comprises at least one sleeve 9, which surrounds an intermediate portion of the shank 8. The sleeve 9 has a bulging shape with respect to the shank 8. The sleeve 9 is also elastically deformable in a substantially radial direction with respect to the shank 8 so as to deform during the axial insertion of the shank 8 through the holes 5 (Figure 3) and to return to the undeformed configuration (Figures 1 and 2) when it is arranged inside the tubular elements 4 so as to prevent the locking pin 6 from accidentally being disengaged out of the holes 5.

With reference to Figures 1-5, the sleeve 9 is fitted on the shank 8 and is structured to elastically deform in a radial direction with respect to the shank 8 between a maximum radial expansion condition (Figures 1 and 2) when it is arranged inside the tubular elements 4 so as to prevent the locking pin 6 from accidentally axially decoupling from the tubular elements 4, and a minimum radial expansion condition when it passes axially through the holes 5 during the engagement/disengagement of the locking pin 6 into/from the holes 5 (Figure 3).

The technical effect of the elastically deformable sleeve 9 is simplifying the assembly and disassembly operation of the locking pin 6 since, compared to the known solutions described above, it eliminates both the need for the use of the nut and its application, and the need for the use of wrenches to screw/unscrew the nut. This simplification reduces the engagement and disengagement times of the locking pin during assembly and therefore affects both the overall assembly/disassembly times of the scaffolding structure and the related costs.

With reference to the preferred embodiment shown in Figures 1, 2 and 5, the sleeve 9 has a substantially circular cross-section transverse to the axis C. The sleeve comprises two collars 9a at the axially opposite ends. The two collars 9a delimit therebetween at least one intermediate tubular portion 9b of the sleeve 9. The intermediate tubular portion 9b of the sleeve 9 has approximately the shape of a barrel. The intermediate tubular portion 9b is structured so that in the maximum expansion condition, corresponding to the undeformed configuration, its maximum diameter is greater than the diameter of the through holes 5 in order to elastically counteract the disengagement (extraction) of the locking pin 6 from the holes 5 (Figures 1,2,4).

According to the invention and as shown in Figures 1-4, a series of circumferential through openings or slits 11 are formed on the intermediate tubular portion 9b and extend approximately parallel to the longitudinal axis C, angularly spaced from each other. Preferably, the through slits 11 can be angularly equally spaced from each other around the axis C.

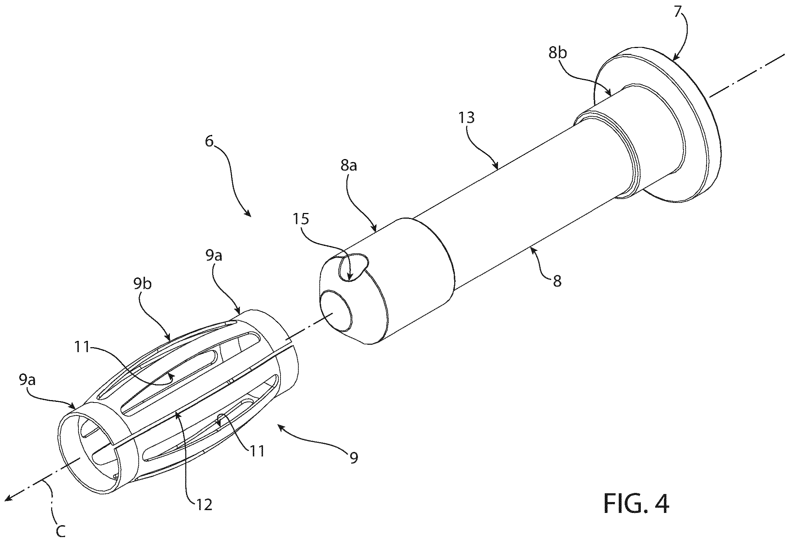

According to an exemplary preferred embodiment shown in Figure 1, the sleeve 9 can be made by using a rectangular sheet made of metallic material, preferably steel or the like, and shaping the sheet so as to make it assume the bulging cylindrical tubular shape. The sheet (which can initially be rectangular, for example) can be shaped so that it has the two opposite major sides, parallel to the axis C, immediately adjacent to and facing each other. The two facing major sides form respective longitudinal edges of the sleeve 9 which delimit thereon a longitudinal opening or slot 12 (Figure 4) which extends along the entire length of the sleeve 9 parallel to said longitudinal axis C.

The technical effect of the slot 12 is allowing the temporary elastic radial widening of the sleeve 9 to facilitate its assembly in the shank 8.

With reference to Figures 1-5, a recess is centrally formed on the outer surface of the shank 8 and forms a seat 13 which houses the sleeve 9. In the illustrated example, the seat 13 has a cylindrical shape. Preferably, the depth of the seat 13 can correspond approximately to the thickness of the sheet forming the sleeve 9.

The seat 13 delimits, i.e., it axially separates on the shank 8, a first cylindrical portion forming the free end 8a and a second, axially opposite cylindrical portion 8b adjacent to the head 7. The first portion forming the free end 8a and the second cylindrical portion 8b may preferably have the same external diameter.

The external diameter of the collars 9a of the sleeve 9 may conveniently be approximately equal to the external diameter of the shank 8 as measured on the first portion 8a and on the second cylindrical portion 8b.

Preferably, the holes 5 have an internal diameter which approximates by excess the external diameter of the shank 8 as measured on the first free portion or end 8a, or on the second cylindrical portion 8b. The sleeve 9 can be structured so as to deform during insertion of the shank 8 into the holes 5 so that its external diameter corresponds approximately to the external diameter of the shank 8 (Figure 3) .

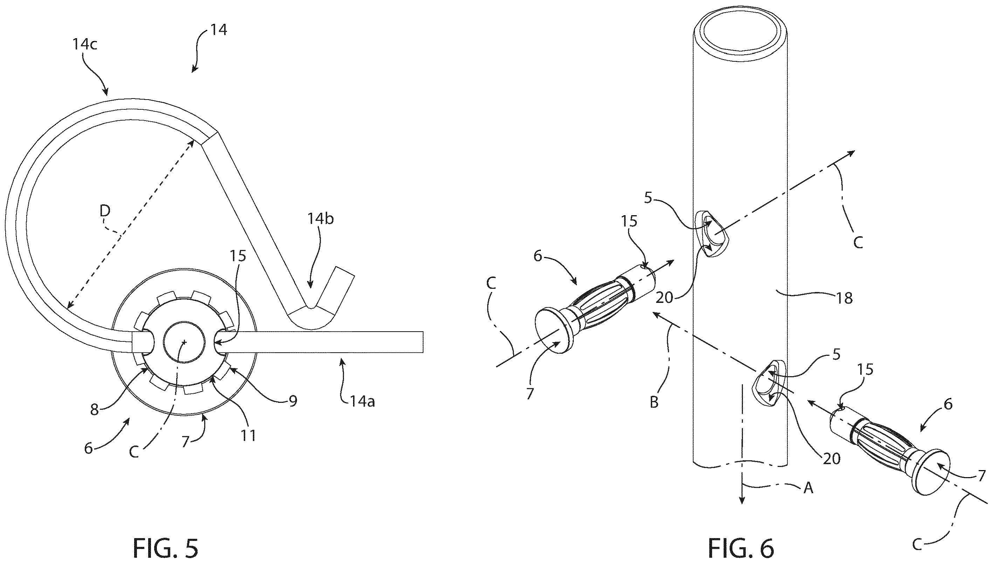

With reference to Figures 1 and 5, the locking system 1 may further preferably comprise an elastic split pin 14, which is designed to be engaged in a through hole 15 formed in the free end portion 8a of the shank 8, transverse to the axis C, to prevent the locking pin 6 from slipping out of the holes 5 of the tubular elements 4.

As shown in Figures 1 and 5, the split pin 14 is formed by a rod, preferably with a circular cross-section, bent to form an approximately semi-annular element 14c. The semi-annular element has a first rectilinear end 14a to be engaged in the hole 15, and a second, opposite end 14b, which has a single V-fold which is elastically arranged abutting against the first end 14a. The semi-annular element 14c of the split pin 14 is designed to slide freely in the hole 15 between the first end 14a and the second end 14b. The semi-annular element 14c of the split pin 14 is sized so as to have a bending diameter D of between about 2.5 and 3 cm, preferably of 2.92 cm. The Applicant has found that the above-mentioned sizing of the semi-annular element 14c facilitates the manual gripping of the split pin 14.

The operation of the locking system 1 described above essentially comprises, during the locking step, telescopically engaging the tubular elements 4 one inside the other so as to align the holes 5 and engaging at least one locking pin 6 in the aligned holes 5. Preferably, it may comprise engaging the split pin 14 in the hole 15 of the pin 6. During the engagement, the sleeve 6, due to its elastic structure, radially deforms through the holes 5 (Figure 3) and then expands and returns to its undeformed configuration (Figures 1 and 2) when it is arranged inside the tubular elements 4 so as to prevent the locking pin 6 from accidentally being disengaged out of the holes 5.

During the unlocking step, the split pin 14, if present, is disengaged (removed) from the hole 15. The locking pin 6 is then extracted from the holes 5 (Figure 3) and the tubular elements 4 are axially uncoupled. In this step, the sleeve 9, due to its elastic structure, radially deforms and passes through the holes 5, and then expands and returns to its undeformed configuration when it is extracted from the tubular elements 4.

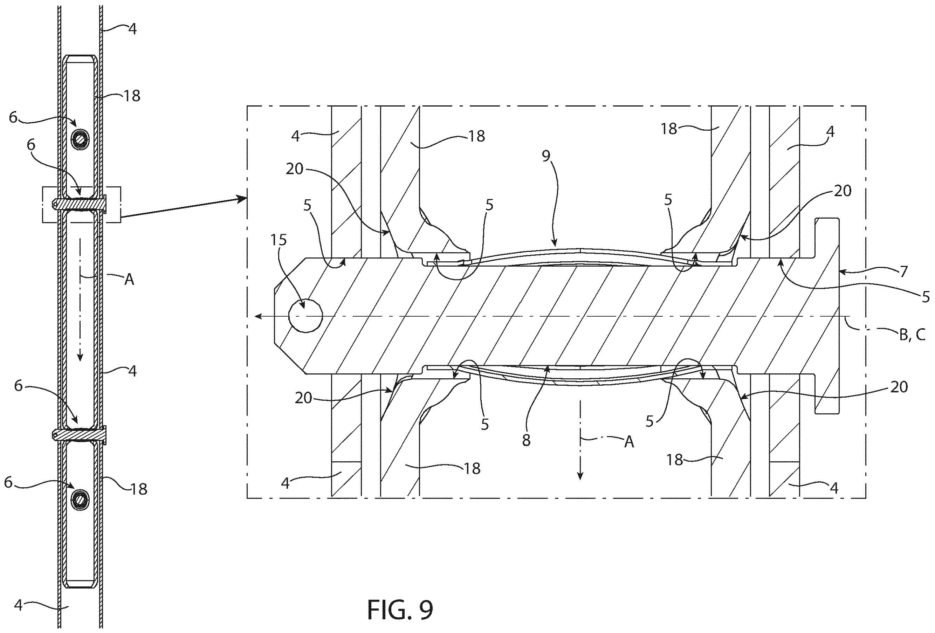

According to a possible embodiment shown in Figures 6, 8 and 9, a tubular element 4 of the locking system 1 comprises a tubular connecting element 18 or (male) connection. The tubular connecting element 18 is designed to be telescopically engaged in/between at least two (female) tubular elements 4 (of two different modular elements 3) and has holes 5 which, in use, are aligned with corresponding holes 5 of the tubular elements 4 along the axis A so as to house respective locking pins 6. According to a possible embodiment shown in Figures 6 and 9, the tubular element 18 can have a cylindrical cross-section, complementary to the cross-section of the tubular elements 4, so that it can be telescopically engaged therein. Preferably, the tubular connecting element 18 can be shaped so that the annular edges 20 surrounding the holes 5 are recessed towards the holes 5 themselves (Figures 6 and 9). Preferably, the recesses of the annular edges 20 surrounding the holes 5 can be obtained by punching. As shown in Figure 9, the inner edges of the punched holes 5 of the tubular element 18 can be approximately in contact with the opposite ends of the intermediate tubular portion 9b of the sleeve 9.

The Applicant has found that this solution has the advantage of axially confining/trapping the sleeve 9 in a correct manner, without the need to install further constraints, such as for example the split pin 14, thereby considerably simplifying the operation of installing the pin, in addition to reducing the elements to be fixed and the respective installation tools.

The system described above is extremely advantageous in that it considerably simplifies the locking of scaffolding structures.

It is clear that the locking system described and illustrated herein can be subject to modifications and variations without departing from the scope of protection defined by the claims.

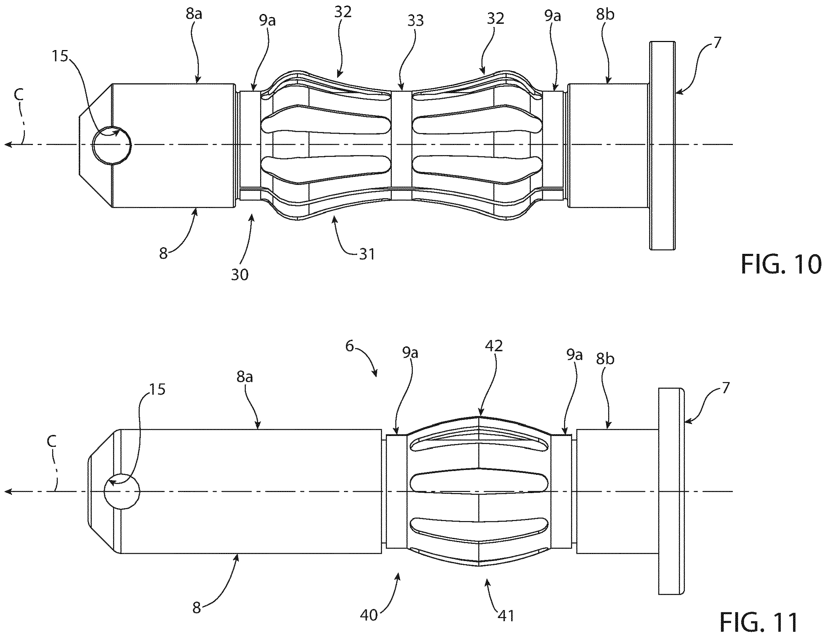

The embodiment shown in Figure 10 relates to a locking pin 30, which is similar to the locking pin 6 shown in Figures 1-9, and whose parts will be identified, where possible, with the same reference numbers identifying corresponding parts of the locking pin 6.

The locking pin 30 differs from the locking pin 6 in that the sleeve 31 has two intermediate tubular portions 32 centrally connected to each other by an annular body 33 fitted on the shank 8. The intermediate tubular portions 32 and the annular body 33 are connected integrally to each other so as to form a single body. In the embodiment shown in Figure 10, the sleeve 31 of the locking pin 30 has an axial cross-section, obtained in the midplane of the locking pin 30 coaxial with the axis C, which is approximately in the shape of a horse saddle.

The embodiment shown in Figure 11 relates to a locking pin 40, which is similar to the locking pin 6 shown in Figures 1-9, and whose parts will be identified, where possible, with the same reference numbers identifying corresponding parts of the locking pin 6. In the embodiment shown in Figure 11, the sleeve 41 of the locking pin 40 differs from the sleeve 9 shown in Figure 1 in that it has an intermediate tubular portion 42 which has an axial length along the axis C smaller than the axial length of the sleeve 9. The intermediate tubular portion 41 also differs from the intermediate tubular portion 9b of the sleeve 9 shown in Figure 1 in that it has an approximately spherical/elliptical shape.

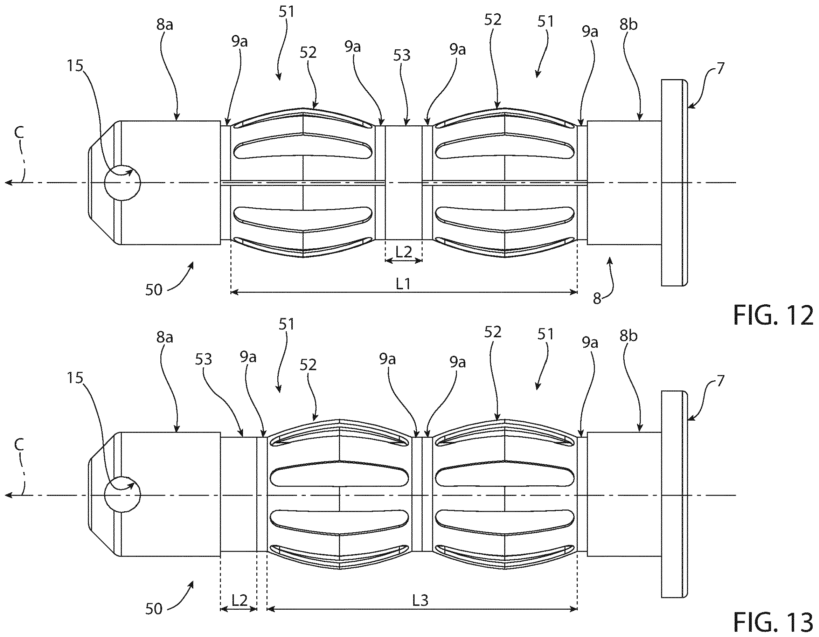

The embodiment shown in Figures 12 and 13 relates to a locking pin 50, which is similar to the locking pin 6 shown in Figures 1-9, and whose parts will be identified, where possible, with the same reference numbers identifying corresponding parts of the locking pin 6.

The locking pin 50 differs from the locking pin 6 in that it comprises two sleeves 51 having respective intermediate tubular portions 52 and at least one annular spacer body 53 fitted on the shank 8. The annular spacer body 53 and the two sleeves 51 are mutually independent components, i.e., they do not form a single body, and each can be separated (uncoupled) from the shank 8. In the example shown in Figure 12, the annular spacer body 53 is arranged on the shank 8 centrally between the two sleeves 51. The Applicant has found that this solution increases the safety of the locking pin 50 since the presence of two intermediate tubular portions 52 further reduces the risk of accidental disengagement of the locking pin 50 from the tubular elements 4. In the embodiment shown in Figure 12, the two sleeves 51 of the locking pin 50 each have an intermediate portion 52 approximately shaped as a barrel.

In the embodiment shown in Figure 12, the locking pin 50 has an axial length L, as measured along the axis C between the opposite axial ends of the respective intermediate portions 52, corresponding to a first value L=L1, whereas the axial length L of the annular spacer body 53 is L2. The first length value L1 is sized to allow the use of the locking pin 50 in tubular elements 4 having an internal diameter K (shown in Figures 2 and 3) having a first value K=K1 approximately equal to L1 (K1=L1).

As shown in Figure 13, the locking pin 50 is conveniently adaptable so that it can be used in tubular elements 4 having a diameter K=K2 smaller than the first value K1.

In the embodiment shown in Figure 13, the locking pin 50 has a modified (different) configuration compared to the configuration in Figure 12, since the two sleeves 51 have the adjacent collars 9a abutting against each other and the annular spacer body 53 is not arranged between the two sleeves 51 as in Figure 12 but is axially displaced so as to be interposed between a sleeve 51 and an end portion of the shank 8, for example the portion 8a. This configuration allows the axial length L comprised between the opposite axial ends of the two intermediate portions 52 of the sleeves 51 to be changed (reduced) from L1 to L3, wherein L3=L1-L2, thereby making the locking pin suitable for tubular elements 4 having an internal diameter K=K2<K1.

The technical effect of this embodiment is allowing the use of the locking pin 50 in tubular elements 4 having different internal diameters K.

The configuration shown in Figure 13 can be easily provided starting from the configuration shown in Figure 12 by uncoupling the annular spacer body 53 from the shank 8, making one sleeve 51 axially slide along the axis C abutting against the collar 9a against the collar 9a of the other sleeve 51, and engaging the annular spacer body 53 in the free portion of the seat of the shank 8 comprised between the sleeve 51 and the portion 8a.

It should be understood that the locking pin 50 can be configured so that the number of sleeves 51, the number of annular spacer bodies 53, and the length L comprised between the opposite axial ends of the two intermediate portions 52 of the sleeves 51 can be varied/selected according to the internal diameter K of the tubular elements 4.

The technical effect obtained is that the locking pin 50 can be conveniently adapted by varying the number of sleeves and/or the lengths of each sleeve and/or the axial position of the sleeves 51 and of the annular spacer bodies 53 on the shank 8 according to the internal diameter K of the tubular elements 4 on which it is intended to be installed.

## Claims

1. A locking system (1) for scaffolding structures (2)
wherein said scaffolding structures (2) comprise modular scaffolding elements (3) being provided with respective tubular elements (4) (18) telescopically coupled to each other,
the locking system (1) comprises
said tubular elements (4) (18),
a series of through holes (5) which are formed on said tubular elements (4) (18) and are aligned in pairs along an axis (B) transversal to the respective pair of coupled tubular elements (4) (18),
and at least one locking pin (6) (30) (40) (50) designed to define a removable joint between at least two tubular elements (4) (18) of said scaffolding structure (2), the locking pin (6) (30) (40) (50) comprises a head (7) and a shank (8), which is designed to be inserted through said holes (5) formed in two of said tubular elements (4) (18) telescopically coupled in order to axially and angularly lock the tubular elements (4) (18) together,
the shank (8) has a free end portion (8a) which, when the locking pin (6) (30) (40) (50) is inserted in the holes (5), protrudes outside the tubular elements (4) (18) on the opposite side with respect to the head (7),
the locking pin (6) (30) (40) (50) also comprises at least one sleeve (9) (31) (41) (51) which surrounds an intermediate portion of the shank (8), has a bulging shape with respect to the shank (8) and is elastically deformable in a substantially radial direction with respect to the shank (8) so as to deform during the insertion of the shank (8) through the holes (5) and then expands and return to the undeformed configuration when it is arranged inside the tubular elements (4) (18) so as to prevent the locking pin (6) (30) (40) (50) from accidentally being disengaged out of said holes (5)
the system being **characterized in that**,
the tubular elements (4) are coupled telescopically to each other and **in that**
said sleeve (9) (51) comprises on the axially opposite ends two collars (9a), which delimit therebetween at least one intermediate tubular portion (9b) (52) in the shape of a barrel; a series of circumferential through slits (11) are formed on said intermediate tubular portion (9b) and extend approximately parallel to a longitudinal axis (C) of the shank (8) and are angularly spaced from each other
said intermediate tubular portion (9b) is structured so that in the maximum expansion condition, corresponding to the undeformed configuration, its maximum diameter is greater than the diameter of the through holes 5 in order to elastically counteract the disengagement of the locking pin (6) from the holes (5).

2. The locking system according to claim 1, wherein a longitudinal slot (12) is formed on said sleeve (9) (31) (41) (51) and extends along the entire length of the sleeve (9) parallel to said longitudinal axis (C) of the shank (8) and is designed to allow the temporary radial widening of the said sleeve (9) during its assembly in the shank (8).

3. The locking system according to any one of the foregoing claims, wherein at least one recess (13) is centrally formed on said shank (8) and forms a seat which houses said at least one sleeve (9).

4. The locking system according claim 3, comprising an elastic split pin (14), wherein on a second portion of the shank (8) there is a through hole (15) approximately transversal to said longitudinal axis (C) which is designed to be engaged by said elastic split pin (14).

5. The locking system according to claim 4, wherein said elastic split pin (14) is formed by a rod bent to form a semi-annular element (14c) and has a first rectilinear end (14a) to be engaged in said through hole (15), and a second end (14b) which has a single V-fold and is elastically arranged abutting against the first end; said semi-annular element (14c) of said split pin (14) being designed to slide freely in said through hole (15) between the first end (14a) and the second end (14b).

6. The locking system according to any one of the foregoing claims, comprising at least one pair of sleeves (51) fitted axially one next to the other on said shank (8) in order to be coaxial with said axis (C) and at least one annular spacer body (53) fitted on said shank (8) in a position adjacent to at least one of said sleeves (51).

7. The locking system according to any one of the foregoing claims, wherein said sleeve (9) is made by a rectangular sheet made of metallic material.

8. The locking system according to claim 7, wherein the sleeve (9) is made by shaping the sheet so as to make it assume the bulging cylindrical tubular shape.

9. The locking system according to claim 8, wherein the sheet has the two opposite major sides, parallel to said axis (C), immediately adjacent to and facing each other.

10. The locking system according to claim 9 wherein said two facing major sides form respective longitudinal edges of the sleeve (9) which delimit thereon said longitudinal slot (12)) which extends along the entire length of the sleeve (9) parallel to said longitudinal axis (C).

11. The locking system according to claim 3, wherein said seat (13) axially separates on the shank (8), a first cylindrical portion forming a free end (8a) and a second, axially opposite cylindrical portion (8b) adjacent to said head (7).

12. The locking system according to claim 11, wherein the external diameter of the collars (9a) of the sleeve (9) are approximately equal to the external diameter of the shank (8) as measured on a first portion (8a) and on the second cylindrical portion (8b).

13. The locking system according to claim 12, wherein the holes (5) have an internal diameter which approximates by excess the external diameter of the shank (8) as measured on the first free end (8a), or on said second cylindrical portion (8b).

14. The locking system according to claim 13 wherein said sleeve (9) is structured so as to deform during insertion of the shank (8) into the holes (5) so that its external diameter corresponds approximately to the external diameter of the shank (8).

15. A scaffolding structure (2) comprising modular scaffolding elements (3) provided with respective tubular elements (4)(18) telescopically coupled to each other, and locking system made according to any of the claims from 1 to 14.

## Patentansprüche

1. Verriegelungssystem (1) für Gerüststrukturen (2),
wobei die Gerüststrukturen (2) modulare Gerüstelemente (3) umfassen, die mit jeweiligen rohrförmigen Elementen (4) (18) versehen sind, die teleskopartig miteinander gekoppelt sind,
wobei das Verriegelungssystem (1) umfasst:
die rohrförmigen Elemente (4) (18),
eine Reihe von Durchgangslöchern (5), die an den rohrförmigen Elementen (4) (18) ausgebildet sind und paarweise entlang einer Achse (B) quer zu dem jeweiligen Paar gekoppelter rohrförmiger Elemente (4) (18) ausgerichtet sind, und zumindest einen Verriegelungsstift (6) (30) (40) (50), der so ausgestaltet ist, dass er eine entfernbare Verbindung zwischen zumindest zwei rohrförmigen Elementen (4) (18) der Gerüststruktur (2) definiert, wobei der Verriegelungsstift (6) (30) (40) (50) einen Kopf (7) und einen Schaft (8), der so ausgestaltet ist, dass er durch die Löcher (5) eingesetzt wird, die in zwei der rohrförmigen Elemente (4) (18) ausgebildet sind, die teleskopartig gekoppelt sind, um die rohrförmigen Elemente (4) (18) miteinander axial und winkelmäßig miteinander zu verriegeln, umfasst,
wobei der Schaft (8) einen freien Endabschnitt (8a) aufweist, der, wenn der Verriegelungsstift (6) (30) (40) (50) in die Löcher (5) eingesetzt ist, auf der gegenüberliegenden Seite in Bezug auf den Kopf (7) aus den rohrförmigen Elementen (4) (18) vorsteht,
wobei der Verriegelungsstift (6) (30) (40) (50) außerdem zumindest eine Hülse (9) (31) (41) (51) umfasst, die einen Zwischenabschnitt des Schafts (8) umgibt, eine gewölbte Form in Bezug auf den Schaft (8) aufweist und in einer im Wesentlichen radialen Richtung in Bezug auf den Schaft (8) elastisch verformbar ist, so dass sie sich während des Einsetzens des Schafts (8) durch die Löcher (5) verformt und sich dann ausdehnt und in die unverformte Konfiguration zurückkehrt, wenn sie innerhalb der rohrförmigen Elemente (4) (18) angeordnet ist, um zu verhindern, dass der Verriegelungsstift (6) (30) (40) (50) versehentlich aus den Löchern (5) gelöst wird,
wobei das System **dadurch gekennzeichnet ist, dass**
die rohrförmigen Elemente (4) teleskopartig miteinander gekoppelt sind und dass die Hülse (9) (51) an den axial gegenüberliegenden Enden zwei Kragen (9a) umfasst, die dazwischen zumindest einen rohrförmigen Zwischenabschnitt (9b) (52) in der Form eines Fasses begrenzen; eine Reihe von umlaufenden Durchgangsschlitzen (11) an dem rohrförmigen Zwischenabschnitt (9b) ausgebildet sind und sich annähernd parallel zu einer Längsachse (C) des Schafts (8) erstrecken und winkelmäßig voneinander beabstandet sind,
der rohrförmige Zwischenabschnitt (9b) so strukturiert ist, dass sein maximaler Durchmesser in dem maximalen Ausdehnungszustand, der der unverformten Konfiguration entspricht, größer als der Durchmesser der Durchgangslöcher (5) ist, um dem Lösen des Verriegelungsstifts (6) aus den Löchern (5) elastisch entgegenzuwirken.

2. Verriegelungssystem nach Anspruch 1, wobei ein Längsschlitz (12) an der Hülse (9) (31) (41) (51) ausgebildet ist und sich entlang der gesamten Länge der Hülse (9) parallel zu der Längsachse (C) des Schafts (8) erstreckt und so ausgestaltet ist, dass er die vorübergehende radiale Aufweitung der Hülse (9) während ihrer Montage in dem Schaft (8) ermöglicht.

3. Verriegelungssystem nach einem der vorangehenden Ansprüche, wobei zumindest eine Vertiefung (13) mittig auf dem Schaft (8) ausgebildet ist und einen Sitz bildet, der die zumindest eine Hülse (9) aufnimmt.

4. Verriegelungssystem nach Anspruch 1, umfassend einen elastischen Splint (14), wobei sich an einem zweiten Abschnitt des Schafts (8) ein Durchgangsloch (15) annähernd schräg zu der Längsachse (C) befindet, das so ausgestaltet ist, dass es mit dem elastischen Splint (14) in Eingriff gebracht wird.

5. Verriegelungssystem nach Anspruch 4, wobei der elastische Splint (14) durch eine Stange gebildet ist, die so gebogen ist, dass sie ein halbringförmiges Element (14c) bildet, und ein erstes geradliniges Ende (14a) aufweist, das in das Durchgangsloch (15) eingreift, und ein zweites Ende (14b), das eine einzelne V-Faltung aufweist und elastisch so angeordnet ist, dass es an das erste Ende anstößt; wobei das halbringförmige Element (14c) des Splints (14) so ausgestaltet ist, dass es in dem Durchgangsloch (15) zwischen dem ersten Ende (14a) und dem zweiten Ende (14b) frei gleitet.

6. Verriegelungssystem nach einem der vorangehenden Ansprüche, umfassend zumindest ein Paar von Hülsen (51), die axial eine neben der anderen auf dem Schaft (8) so angebracht sind, dass sie koaxial zu der Achse (C) liegen, und zumindest einen ringförmigen Abstandskörper (53), der auf dem Schaft (8) in einer Position angrenzend an zumindest eine der Hülsen (51) angebracht ist.

7. Verriegelungssystem nach einem der vorangehenden Ansprüche, wobei die Hülse (9) aus einem rechteckigen Blech aus metallischem Material besteht.

8. Verriegelungssystem nach Anspruch 7, wobei die Hülse (9) durch Formen des Blechs so hergestellt wird, dass sie die gewölbte zylindrische Rohrform annimmt.

9. Verriegelungssystem nach Anspruch 8, wobei das Blech zwei gegenüberliegende Hauptseiten aufweist, die parallel zu der Achse (C) verlaufen, unmittelbar aneinander angrenzen und einander zugewandt sind.

10. Verriegelungssystem nach Anspruch 9, wobei die beiden einander zugewandten Hauptseiten jeweilige Längskanten der Hülse (9) bilden, die darauf den Längsschlitz (12) begrenzen, der sich entlang der gesamten Länge der Hülse (9) parallel zu der Längsachse (C) erstreckt.

11. Verriegelungssystem nach Anspruch 3, wobei der Sitz (13) auf dem Schaft (8) einen ersten zylindrischen Abschnitt, der ein freies Ende (8a) bildet, und einen zweiten, axial gegenüberliegenden zylindrischen Abschnitt (8b) angrenzend an den Kopf (7) axial trennt.

12. Verriegelungssystem nach Anspruch 11, wobei der Außendurchmesser der Kragen (9a) der Hülse (9) ungefähr gleich dem Außendurchmesser des Schafts (8) ist, wie an einem ersten Abschnitt (8a) und an dem zweiten zylindrischen Abschnitt (8b) gemessen.

13. Verriegelungssystem nach Anspruch 12, wobei die Löcher (5) einen Innendurchmesser aufweisen, der ungefähr 5-mal größer ist als der Außendurchmesser des Schafts (8), wie an dem ersten freien Ende (8a) oder an dem zweiten zylindrischen Abschnitt (8b) gemessen.

14. Verriegelungssystem nach Anspruch 13, wobei die Hülse (9) so strukturiert ist, dass sie sich während des Einsetzens des Schafts (8) in die Löcher (5) verformt, so dass ihr Außendurchmesser ungefähr dem Außendurchmesser des Schafts (8) entspricht.

15. Gerüststruktur (2), umfassend modulare Gerüstelemente (3), die mit jeweiligen rohrförmigen Elementen (4) (18) versehen sind, die teleskopisch miteinander gekoppelt sind, und ein Verriegelungssystem, das nach einem der Ansprüche von 1 bis 14 hergestellt ist.

## Revendications

1. Système de verrouillage (1) pour structures d'échafaudage (2),
dans lequel lesdites structures d'échafaudage (2) comprennent des éléments d'échafaudage modulaires (3) qui sont prévus avec des éléments tubulaires (4) (18) respectifs couplés de manière télescopique entre eux,
le système de verrouillage (1) comprend :
lesdits éléments tubulaires (4) (18),
une série de trous débouchants (5) qui sont formés sur lesdits éléments tubulaires (4) (18) et sont alignés en paires le long d'un axe (B) transversal par rapport à la paire respective d'éléments tubulaires (4) (18) couplés,
et au moins une goupille de verrouillage (6) (30) (40) (50) conçue pour définir un joint démontable entre au moins deux éléments tubulaires (4) (18) de ladite structure d'échafaudage (2), la goupille de verrouillage (6) (30) (40) (50) comprend une tête (7) et une tige (8) qui est conçue pour être insérée dans lesdits trous (5) formés dans deux desdits éléments tubulaires (4) (18) couplés de manière télescopique afin de verrouiller de manière axiale et angulaire les éléments tubulaires (4) (18) ensemble,
la tige (8) a une partie d'extrémité libre (8a) qui, lorsque la goupille de verrouillage (6) (30) (40) (50) est insérée dans les trous (5), fait saillie à l'extérieur des éléments tubulaires (4) (18) du côté opposé par rapport à la tête (7),
la goupille de verrouillage (6) (30) (40) (50) comprend également au moins un manchon (9) (31) (41) (51) qui entoure une partie intermédiaire de la tige (8), a une forme renflée par rapport à la tige (8) et est élastiquement déformable dans une direction sensiblement radiale par rapport à la tige (8) afin de se déformer pendant l'insertion de la tige (8) dans les trous (5) et subir ensuite une expansion et revenir à la configuration non déformée lorsqu'il est agencé à l'intérieur des éléments tubulaires (4) (18) afin d'empêcher la goupille de verrouillage (6) (30) (40) (50) de sortir accidentellement desdits trous (5),
le système étant **caractérisé en ce que** :
les éléments tubulaires (4) sont couplés de manière télescopique entre eux, et **en ce que** :
ledit manchon (9) (51) comprend, sur les extrémités axialement opposées, deux colliers (9a) qui délimitent entre eux, au moins une partie tubulaire intermédiaire (9b) (52) en forme de corps cylindrique ; une série de fentes passantes circonférentielles (11) sont formées sur ladite partie tubulaire intermédiaire (9b) et s'étendent approximativement parallèlement à un axe longitudinal (C) de la tige (8) et sont espacées, de manière angulaire, les unes des autres,
ladite partie tubulaire intermédiaire (9b) est structurée de sorte que dans la condition d'expansion maximum, correspondant à la configuration non déformée, son diamètre maximum est supérieur au diamètre des trous débouchants (5) afin de contrer élastiquement le dégagement de la goupille de verrouillage (6) des trous (5).

2. Système de verrouillage selon la revendication 1, dans lequel une fente longitudinale (12) est formée sur ledit manchon (9) (31) (41) (51) et s'étend le long de toute la longueur du manchon (9) parallèlement audit axe longitudinal (C) de la tige (8) et est conçue pour permettre l'élargissement radial temporaire dudit manchon (9) pendant son montage dans la tige (8).

3. Système de verrouillage selon l'une quelconque des revendications précédentes, dans lequel au moins un évidement (13) est formé de manière centrale sur ladite tige (8) et forme un siège qui loge ledit au moins un manchon (9).

4. Système de verrouillage selon la revendication 3, comprenant une goupille fendue élastique (14), dans lequel sur une deuxième partie de la tige (8), on trouve un trou débouchant (15) approximativement transversal par rapport audit axe longitudinal (C) qui est conçu pour être mis en prise par ladite goupille fendue élastique (14).

5. Système de verrouillage selon la revendication 4, dans lequel ladite goupille fendue élastique (14) est formée par une tige pliée pour former un élément semi-annulaire (14c) et a une première extrémité rectiligne (14a) destinée à être mise en prise dans ledit trou débouchant (15), et une deuxième extrémité (14b) qui a un seul pli en V et est élastiquement agencée en butée contre la première extrémité ; ledit élément semi-annulaire (14c) de ladite goupille fendue (14) étant conçu pour coulisser librement dans ledit trou débouchant (15) entre la première extrémité (14a) et la deuxième extrémité (14b).

6. Système de verrouillage selon l'une quelconque des revendications précédentes, comprenant au moins une paire de manchons (51) montés de manière axiale l'un à côté de l'autre sur ladite tige (8) afin d'être coaxiaux avec ledit axe (C) et au moins un corps d'espacement annulaire (53) monté sur ladite tige (8) dans une position adjacente à au moins un desdits manchons (51).

7. Système de verrouillage selon l'une quelconque des revendications précédentes, dans lequel ledit manchon (9) est réalisé par une feuille rectangulaire réalisée avec un matériau métallique.

8. Système de verrouillage selon la revendication 7, dans lequel le manchon (9) est réalisé en formant la feuille afin de lui faire prendre la forme tubulaire cylindrique renflée.

9. Système de verrouillage selon la revendication 8, dans lequel la feuille a les deux côtés majeurs opposés, parallèles audit axe (C), immédiatement adjacents l'un par rapport à l'autre et se faisant face.

10. Système de verrouillage selon la revendication 9, dans lequel lesdits deux côtés majeurs en vis-à-vis forment les bords longitudinaux respectifs du manchon (9) qui délimitent sur ce dernier, ladite fente longitudinale (12) qui s'étend le long de toute la longueur du manchon (9) parallèlement audit axe longitudinal (C).

11. Système de verrouillage selon la revendication 3, dans lequel ledit siège (13) sépare axialement, sur la tige (8), une première partie cylindrique formant une extrémité libre (8a) et une deuxième partie cylindrique (8b) axialement opposée adjacente à ladite tête (7).

12. Système de verrouillage selon la revendication 11, dans lequel le diamètre externe des colliers (9a) du manchon (9) est approximativement égal au diamètre externe de la tige (8), tel que mesuré sur une première partie (8a) et sur la deuxième partie cylindrique (8b).

13. Système de verrouillage selon la revendication 12, dans lequel les trous (5) ont un diamètre interne qui s'approche par excès du diamètre externe de la tige (8), tel que mesuré sur la première extrémité libre (8a) ou sur ladite deuxième partie cylindrique (8b).

14. Système de verrouillage selon la revendication 13, dans lequel ledit manchon (9) est structuré afin de se déformer pendant l'insertion de la tige (8) dans les trous (5) de sorte que son diamètre externe correspond approximativement au diamètre externe de la tige (8).

15. Structure d'échafaudage (2) comprenant des éléments d'échafaudage modulaires (3) prévus avec des éléments tubulaires (4) (18) respectifs couplés de manière télescopique entre eux, et le système de verrouillage réalisé selon l'une quelconque des revendications 1 à 14.
